# EUROPEAN PATENT SPECIFICATION

(11) **EP 1 492 016 B1**
(45) Date of publication and mention of the grant of the patent: **14.01.2009**
(21) Application number: 04014997.3
(22) Date of filing: 25.06.2004
(51) Int. Cl.: G06F 13/12, H04L 12/28

(54) **Interface device coupled to PC host via USB**
Schnittstellenvorrichtung angeschlossen an einen Host-PC via USB
Interface couplé à un PC via USB

(30) Priority: 26.06.2003 US 482737 P
(43) Date of publication of application: 29.12.2004
(73) Proprietor: Broadcom Corporation, Irvine, CA 92617 (US)
(72) Inventor: Dove, Michael, Los Gatos, CA 95030 (US); Robinson, Timothy B., Boulder Creek, CA 95006 (US); Trachewsky, Jasn A., Irvine, CA 92618-7013 (US)
(74) Representative: Jehle, Volker Armin

(56) References cited:
- WO-A-02/056489
- US-A- 5 890 015
- US-A1- 2003 039 261

## Description

### BACKGROUND

### 1. Technical Field

This invention relates generally to data networks and more particularly to data networks that include radio frequency integrated circuits used in wireless communication systems.

### 2. Related Art

Communication systems are known to support wireless and wire lined communications between wireless and/or wire lined communication devices. Such communication systems range from national and/or international cellular telephone systems to the Internet to point-to-point in-home wireless networks. Each type of communication system is constructed, and hence operates, in accordance with one or more communication standard. For instance, wireless communication systems may operate in accordance with one or more standard including, but not limited to, IEEE 802.11, Bluetooth, advanced mobile phone services (AMPS), digital AMPS, global system for mobile communications (GSM), code division multiple access (CDMA), local multi-point distribution systems (LMDS), multi-channel-multi-point distribution systems (MMDS), and/or variations thereof.

Depending on the type of wireless communication system, a wireless communication device, such as a cellular telephone, two-way radio, personal digital assistant (PDA), personal computer (PC), laptop computer, home entertainment equipment, etc., communicates directly or indirectly with other wireless communication devices. For direct communications (also known as point-to-point communications), the participating wireless communication devices tune their receivers and transmitters to the same channel or channels (e.g., one of a plurality of radio frequency (RF) carriers of the wireless communication system) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via a public switched telephone network, via the Internet, and/or via some other wide area network.

Each wireless communication device includes a built-in radio transceiver (i.e., receiver and transmitter) or is coupled to an associated radio transceiver (e.g., a station for in-home and/or in-building wireless communication networks, RF modem, etc.) to enable the device to participate in wireless communications. As is known, the transmitter includes a data modulation stage, one or more intermediate frequency stages, and a power amplifier. The data modulation stage converts raw data into baseband signals in accordance with the particular wireless communication standard. In systems that utilize an intermediate frequency stage, the one or more intermediate frequency stages mix the baseband signals with one or more local oscillations to produce RF signals. For direct conversion systems, the baseband signals are directly up-converted to RF signals. The power amplifier amplifies the RF signals prior to transmission via an antenna.

Wireless Local Area Networks (WLANs) that support one or more of the IEEE 802.11 standards, e.g., IEEE 802.11(a), IEEE 802.11(b), IEEE 802.11(g), etc., are rapidly becoming available. It is therefore desirable to enable computer systems to operate within a WLAN. While many computers are constructed with WLAN interfaces, most computer systems are not so constructed. Further, with the advancement of 2.5G and 3G cellular networks that support high-speed data service, it is desirable for computer systems to receive data service from such cellular networks. Further, as Universal Serial Bus (USE) protocol devices proliferate, it is further desirable to facilitate transmission between wireless and USB protocols.

### SUMMARY

An intelligent dual host USB interface module includes a plurality of USB ports for receiving and transmitting USB communication signals over a corresponding plurality of USB cables/lines. The module further comprises memory for storing software instructions that define logic for communicating over the plurality of USB lines, a processing module coupled to the intelligent dual host USB interface module operable to communicate over the plurality of USB lines, wherein the processing module is operable to receive USB communications from the intelligent dual host USB interface module and to determine whether to transmit the received communications over the intelligent dual host USB interface module to a downstream USB device or whether to process the received USB communications. The terms "process" and "processing" relate to the specific type of device and respective functionality. For example, the module may be formed within a camera wherein processing relates to camera functionality. The module may be formed within a printer wherein processing relates to printing text and images. The module may be formed within a audio/video playback device such as an MP3 player, a CD player or a DVD player wherein processing relates to generating audio/video. The module may further be formed within a hard disk drive wherein processing relates to storing received data or computer instructions. Finally, the module may be formed within a wireless access point or host wherein processing relates to converting received USB signals to baseband and then to radio frequency signals for transmission over a wireless medium to a wireless host or access point.

Generally, the intelligent dual host USB interface module is operable to determine whether to transmit or process the received communications based upon a plurality of factors including a determined source type that produced the USB communications to the module or a determined class of a device that produced the USB communications to the module. The module is operable in a repeater mode and in a processing mode wherein, in the repeater mode, the module receives the USB communications over a first USB line and produces the communications over a second USB line to a downstream USB device.

Finally, in one embodiment of the invention, received data from a medium or source is stored in a USB protocol stack in a USB format to facilitate subsequent processing by known logic and algorithms for processing USB data. Thus, for example, data received in an embodiment that includes the wireless radio circuitry includes down-converting the received RF to baseband, further converting the data to USB protocol formats, and storing the data in a USB protocol stack. Thus, for this embodiment, the inventive device includes circuitry and logic to perform the described conversions to a USB protocol.

According to an aspect of the invention, an intelligent wireless local area network USB port interface device is provided, comprising:
a local oscillator that generates an RF local oscillation signal corresponding to an RF channel;
a receiver section operably coupled to the local oscillator to receive the RF local oscillation signal, wherein the receiver section receives an incoming RF signal, and
wherein the receiver section down-converts the incoming RF signal based upon the RF local oscillation signal to produce an incoming baseband signal;
a transmitter section operably coupled to the local oscillator to receive the RF local oscillation signal, wherein the transmitter section receives an outgoing baseband signal, and wherein the transmitter section up-converts the outgoing baseband signal to produce an outgoing RF signal;
a dual host USB interface module further including a plurality of USB ports for receiving and transmitting USB format signals over a corresponding plurality of USB lines;
memory for storing wireless interface device software instructions that define logic for communicating over the plurality of USB lines; and
a processing module coupled to the dual host USB interface module operable to communicate over the plurality of USB lines, the processing module further coupled to receive the wireless interface device software instructions that define logic for communicating over the plurality of USB lines from the memory.

According to an aspect of the invention, an intelligent wireless local area network USB port interface device comprises:
a local oscillator that generates an RF local oscillation signal corresponding to an RF channel;
a receiver section operably coupled to the local oscillator to receive the RF local oscillation signal, wherein the receiver section receives an incoming RF signal, and wherein the receiver section down-converts the incoming RF signal based upon the RF local oscillation signal to produce an incoming baseband signal;
a transmitter section operably coupled to the local oscillator to receive the RF local oscillation signal, wherein the transmitter section receives an outgoing baseband signal, and wherein the transmitter section up-converts the outgoing baseband signal to produce an outgoing RF signal;
a dual host USB interface module further including a plurality of USB ports for receiving and transmitting USB format signals over a corresponding plurality of USB lines;
memory for storing wireless interface device software instructions that define logic for communicating over the plurality of USB lines;
a processing module coupled to the dual host USB interface module operable to communicate over the plurality of USB lines, the processing module further coupled to receive the wireless interface device software instructions that define logic for communicating over the plurality of USB lines from the memory; and
a baseband processor operably coupled to communicate with the processing module and to the transmitter and receiver sections wherein the processing module receives at least one of USB communications from the dual host USB interface module and wireless communications from the receiver section and determines whether to transmit the received communications over at least one of the transmitter section and the dual host USB interface module.

Advantageously, the intelligent wireless local area network USB port interface device further includes digital camera circuitry.

Advantageously, the intelligent wireless local area network USB port interface device further includes printer circuitry.

Advantageously, the receiver and transmitter sections are operable to communicate over at least one of I.E.E.E. 802.11(a), 802.11(b), 802.11(g), 802.11(n) or Bluetooth wireless local area network protocols.

Advantageously, the receiver and transmitter sections are operable to communicate over a wireless cellular network communication protocol.

Advantageously, the wireless cellular network communication protocol comprises one of code division multiple access (CDMA), North American time division multiple access (TDMA), and general system for mobile communications (GSM).

Advantageously, the wireless cellular network communication protocol comprises one of the general packet radio service (GPRS), universal mobile telephone service (UMTS), and enhanced data GSM environment (EDGE).

According to another aspect of the invention, an intelligent dual host USB interface module is provided, further including a plurality of USB ports for receiving and transmitting USB communication signals over a corresponding plurality of USB lines;
memory for storing software instructions that define logic for communicating over the plurality of USB lines;
a processing module coupled to the intelligent dual host USB interface module operable to communicate over the plurality of USB lines, the processing module further coupled to receive the software instructions that define logic for communicating over the plurality of USB lines from the memory; and
wherein the processing module is operable to receive USB communications from the intelligent dual host USB interface module and to determine whether to transmit the received communications over the intelligent dual host USB interface module to a downstream USB device or whether to process the received USB communications.

Advantageously, the module is operable to determine whether to transmit or process the received communications based upon a determined source type that produced the USB communications to the module.

Advantageously, the module is operable to determine whether to transmit or process the received communications based upon a determined class of a device that produced the USB communications to the module.

Advantageously, the module is operable in a repeater mode and in a processing mode wherein, in the repeater mode, the module receives the USB communications over a first USB line and produces the communications over a second USB line to a downstream USB device.

Advantageously, the module is formed within a camera.

Advantageously, the module is formed within a printer.

Advantageously, the module is formed within an MP3 player.

Advantageously, the module is formed within a DVD player.

Advantageously, the module is formed within a hard disk drive.

Advantageously, the module is formed within a wireless local area network access point.

Advantageously, the module is formed within a wireless local area network host device.

According to an aspect of the invention, a method within an intelligent wireless local area network USB port interface device comprises:
generating an RF local oscillation signal corresponding to an RF channel;
receiving an incoming RF signal, and wherein a receiver section down-converts the incoming RF signal based upon the RF local oscillation signal to produce an incoming baseband signal;
receiving an outgoing baseband signal and up-converting the outgoing baseband signal to produce an outgoing RF signal based upon the RF local oscillation signal;
receiving and transmitting USB format signals over a corresponding plurality of USB lines;
wherein the method further includes determining whether to transmit received communication signals as an outgoing RF signal or a wired signal over a USB line or whether to process the received communication signals according to a specified processing function.

Advantageously, a USB host produces the communication signals over a first USB line.

Advantageously, the intelligent wireless local area network USB port interface device receives the communication signals from the first USB line and produces the communication signals over a second USB line.

Advantageously, the intelligent wireless local area network USB port interface device receives the communication signals from the first USB line and produces the communication signals onto a wireless RF channel to an access point coupled to the Internet for delivery to a specified destination over the Internet.

Advantageously, the communication signals are received by an access point/router device which, in turn, produces the communication signals to a personal computer.

According to an aspect of the invention, a personal computer comprises:
a plurality of USB ports for transmitting and receiving USB protocol signals;
memory for storing computer instructions that define operational logic for the personal computer, which instructions include USB port operations logic;
a processor coupled to receive the computer instructions; and
wherein the computer instructions define logic for receiving communication signals from one of the plurality of USB ports and determining whether to forward the communication signals to another device by way of a USB port of the plurality of USB ports or whether to process the received communication signals.

Advantageously, the personal computer includes USB processing logic that processes the manipulated communication signals within the specified USB stack in a transparent manner.

Advantageously, the personal computer processes the received communication signals to store into a USB stack to enable logic within the personal computer to process the received communication signals as if received over a USB port.

According to another aspect of the invention, a wireless interface device that services a computer host is provided, the wireless interface device comprising:
a host interface that couples the wireless interface device to the computer host according to a standardized USB interface protocol;
a processing module operably coupled to the host interface;
memory operably coupled to the processing module;
a baseband processor operably coupled to the processing module; and
a Radio Frequency (RF) interface operably coupled to the baseband processor.

Advantageously, the standardized interface protocol is a Universal Serial Bus 2.0 interface protocol.

Advantageously, the baseband processor and RF interface support Wireless Local Area Network (WLAN) operations consistent with a WLAN interface standard.

Advantageously, the WLAN interface standard comprises one of IEEE 802.11(a), IEEE 802.11(b), and IEEE 802.11(g).

Advantageously, the baseband processor and RF interface support cellular operations consistent with a cellular interface standard.

Advantageously, the cellular interface standard is selected from a group consisting of one of IS-95, 1xRTT, 1xEV-DO, 1xEV-DV, UMTS, GSM, EDGE, and GPRS.

### BRIEF DESCRIPTION OF THE DRAWINGS

Figure 1 is a schematic block diagram illustrating a communication system that includes a plurality of base stations or access points, a plurality of wireless communication devices and a network hardware component in accordance with the present invention;
Figure 2 is a schematic block diagram illustrating a wireless communication device that includes a host device and an associated radio in accordance with the present invention;
Figure 3 is a system diagram illustrating the interconnection of various devices to a computer host via a Universal Serial Bus (USB) in accordance with an embodiment of the present invention;
Figure 4 is a block diagram illustrating a wireless interface device constructed according to one embodiment of the present invention;
Figure 5 is a flowchart illustrating one method of the present invention;
Figure 6 is a flowchart illustrating one embodiment of the present invention performed in an interface device;
Figure 7 is a flowchart illustrating additional aspects of the embodiments of the wireless interface devices; and
Figure 8 is a flowchart illustrating a method of an interface device according to one embodiment of the present invention.

### DETAILED DESCRIPTION OF A PREFERRED EMBODIMENT

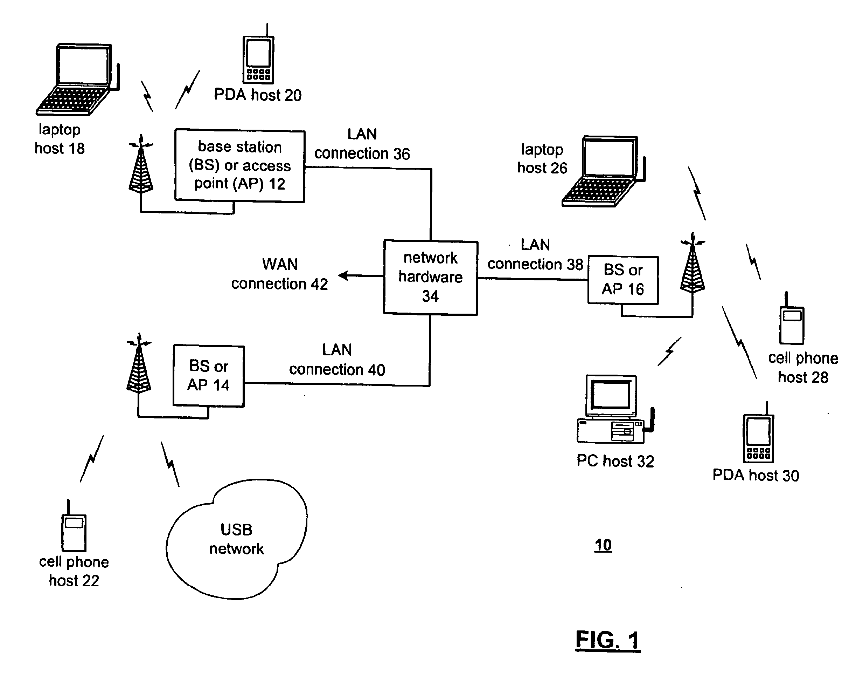

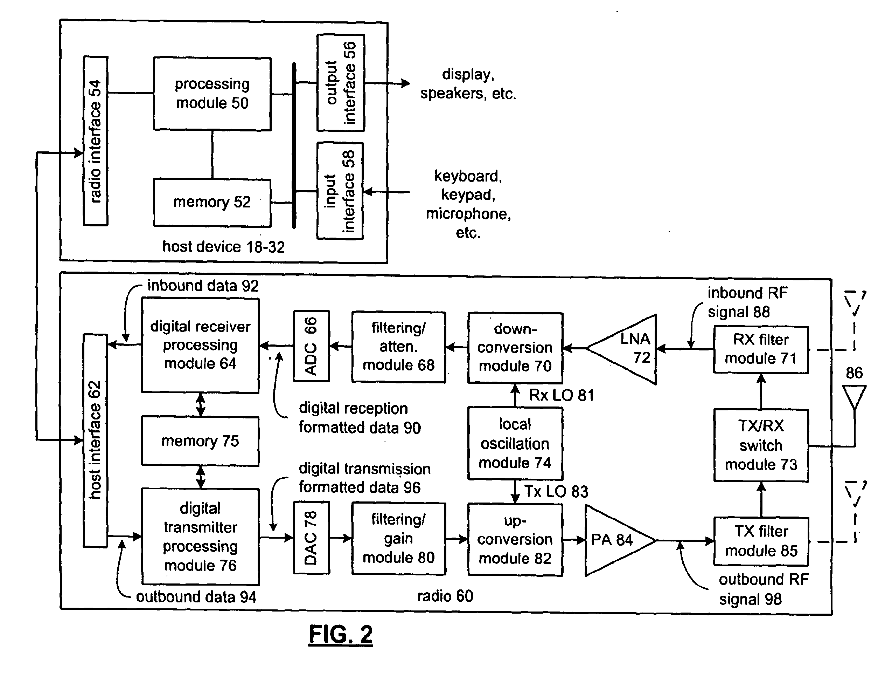

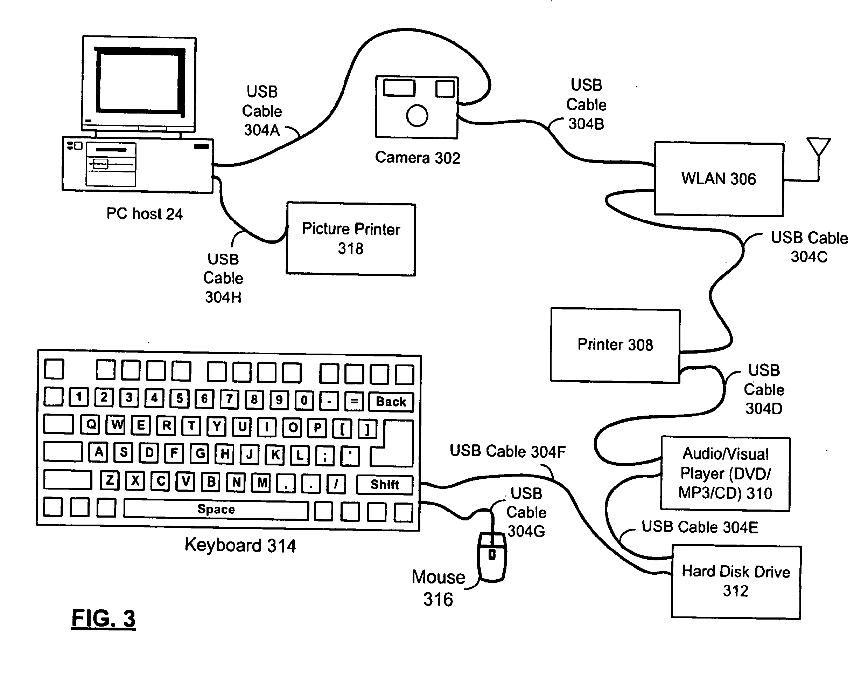

Figure 1 is a schematic block diagram illustrating a communication system 10 that includes a plurality of base stations or access points 12-16, a plurality of wireless communication devices 18-32 and a network hardware component 34. The wireless communication devices 18-32 may be laptop host computers 18 and 26, personal digital assistant hosts 20 and 30, personal computer host 32, and/or cellular telephone hosts 22 and 28. The details of the wireless communication devices will be described in greater detail with reference to Figure 2. As may also be seen, a USB network is provided that includes a wireless interface device that is coupled to a plurality of USB devices as well. An exemplary USB network is shown in Figure 3 below.

The base stations or access points 12-16 are operably coupled to the network hardware component 34 via Local Area Network (LAN) connections 36, 38 and 40. The network hardware component 34, which may be a router, switch, bridge, modem, system controller, etc., provides a wide area network connection 42 for the communication system 10. Each of the base stations or access points 12-16 has an associated antenna or antenna array to communicate with the wireless communication devices in its area. Typically, the wireless communication devices 18-32 register with the particular base station or access points 12-16 to receive services from the communication system 10. For direct connections (i.e., point-to-point communications), wireless communication devices communicate directly via an allocated channel.

Typically, base stations are used for cellular telephone systems and like-type systems, while access points are used for in-home or in-building wireless networks. Regardless of the particular type of communication system, each wireless communication device includes a built-in radio and/or is coupled to a radio. The radio includes a highly linear amplifier and/or programmable multi-stage amplifier as disclosed herein to enhance performance, reduce costs, reduce size, and/or enhance broadband applications.

Figure 2 is a schematic block diagram illustrating a wireless communication device that includes the host device 18-32 and an associated radio 60. For cellular telephone hosts, the radio 60 is a built-in component. For personal digital assistants hosts, laptop hosts, and/or personal computer hosts, the radio 60 may be built-in or an externally coupled component.

As illustrated, the host device 18-32 includes a processing module 50, a memory 52, a radio interface 54, an input interface 58 and an output interface 56. The processing module 50 and memory 52 execute the corresponding instructions that are typically done by the host device. For example, for a cellular telephone host device, the processing module 50 performs the corresponding communication functions in accordance with a particular cellular telephone standard. The radio interface 54 couples to the host device 18-32 via a host interface that may be a PCI interface, a USB interface, a serial interface, a parallel interface, or another type of interface. The host interface may itself be a wireless interface, e.g., a Bluetooth interface or IEEE 802.15 interface.

The radio interface 54 allows data to be received from and sent to the radio 60. For data received from the radio 60 (e.g., inbound data), the radio interface 54 provides the data to the processing module 50 for further processing and/or routing to the output interface 56. The output interface 56 provides connectivity to an output device such as a display, monitor, speakers, etc., such that the received data may be displayed. The radio interface 54 also provides data from the processing module 50 to the radio 60. The processing module 50 may receive the outbound data from an input device such as a keyboard, keypad, microphone, etc., via the input interface 58 or generate the data itself. For data received via the input interface 58, the processing module 50 may perform a corresponding host function on the data and/or route it to the radio 60 via the radio interface 54.

Radio 60 includes a host interface 62, digital receiver processing module 64, an analog-to-digital converter 66, a filtering/attenuation module 68, an IF mixing down-conversion module 70, a receiver filter module 71, a low noise amplifier 72, a transmitter/receiver (TX/RX) switch module 73, a local oscillation module 74, a memory 75, a digital transmitter processing module 76, a digital-to-analog converter 78, a filtering/gain module 80, an IF mixing up-conversion module 82, a power amplifier 84, a transmitter filter module 85, and an antenna 86. The antenna 86 may be a single antenna that is shared by the transmit and receive paths as regulated by the TX/RX switch module 73, or may include separate antennas for the transmit path and receive path. The antenna implementation will depend on the particular standard to which the wireless communication device is compliant.

The digital receiver processing module 64 and the digital transmitter processing module 76, in combination with operational instructions stored in memory 75, execute digital receiver functions and digital transmitter functions, respectively. The digital receiver functions include, but are not limited to, digital intermediate frequency to baseband conversion, demodulation, constellation demapping, decoding, and/or descrambling. The digital transmitter functions include, but are not limited to, scrambling, encoding, constellation mapping, modulation, and/or digital baseband to IF conversion. The digital receiver and transmitter processing modules 64 and 76 may be implemented using a shared processing device, individual processing devices, or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 75 may be a single memory device or a plurality of memory devices. Such a memory device may be a read-only memory, random access memory, volatile memory, non-volatile memory, static memory, dynamic memory, flash memory, and/or any device that stores digital information. Note that when the processing module 64 and/or 76 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry. The memory 75 stores, and the processing module 64 and/or 76 execute, operational instructions.

In operation, the radio 60 receives outbound data 94 from the host device 18-32 via the host interface 62. The host interface 62 routes the outbound data 94 to the digital transmitter processing module 76, which processes the outbound data 94 in accordance with a particular wireless communication standard (e.g., IEEE 802.11a, IEEE 802.11b, IEEE 802.11g, Bluetooth, etc.) to produce digital transmission formatted data 96. The digital transmission formatted data 96 will be a digital baseband signal or a digital low IF signal, where the low IF typically will be in the frequency range of one hundred kilohertz to a few megahertz.

The digital-to-analog converter 78 converts the digital transmission formatted data 96 from the digital domain to the analog domain. The filtering/gain module 80 filters and/or adjusts the gain of the analog signal prior to providing it to the IF mixing up-conversion module 82. The IF mixing up-conversion module 82 directly converts the analog baseband or low IF signal into an RF signal based on a transmitter local oscillation 83 provided by local oscillation module 74. The power amplifier 84 amplifies the RF signal to produce an outbound RF signal 98, which is filtered by the transmitter filter module 85. The antenna 86 transmits the outbound RF signal 98 to a targeted device such as a base station, an access point and/or another wireless communication device.

The radio 60 also receives an inbound RF signal 88 via the antenna 86, which was transmitted by a base station, an access point, or another wireless communication device. The antenna 86 provides the inbound RF signal 88 to the receiver filter module 71 via the TX/RX switch module 73, where the RX filter module 71 bandpass filters the inbound RF signal 88. The RX filter module 71 provides the filtered RF signal to low noise amplifier 72, which amplifies the inbound RF signal 88 to produce an amplified inbound RF signal. The low noise amplifier 72 provides the amplified inbound RF signal to the IF mixing down-conversion module 70, which directly converts the amplified inbound RF signal into an inbound low IF signal or baseband signal based on a receiver local oscillation signal 81 provided by local oscillation module 74. The down-conversion module 70 provides the inbound low IF signal or baseband signal to the filtering/attenuation module 68. The filtering/attenuation module 68 may be implemented in accordance with the teachings of the present invention to filter and/or attenuate the inbound low IF signal or the inbound baseband signal to produce a filtered inbound signal.

The analog-to-digital converter 66 converts the filtered inbound signal from the analog domain to the digital domain to produce digital reception formatted data 90. The digital receiver processing module 64 decodes, descrambles, demaps, and/or demodulates the digital reception formatted data 90 to recapture inbound data 92 in accordance with the particular wireless communication standard being implemented by radio 60. The host interface 62 provides the recaptured inbound data 92 to the host device 18-32 via the radio interface 54.

As one of average skill in the art will appreciate, the wireless communication device of Figure 2 may be implemented using one or more integrated circuits. For example, the host device may be implemented on a first integrated circuit, while the digital receiver processing module 64, the digital transmitter processing module 76 and memory 75 may be implemented on a second integrated circuit, and the remaining components of the radio 60, less the antenna 86, may be implemented on a third integrated circuit. As an alternate example, the radio 60 may be implemented on a single integrated circuit. As yet another example, the processing module 50 of the host device 18-32 and the digital receiver and transmitter processing modules 64 and 76 may be a common processing device implemented on a single integrated circuit. Further, memory 52 and memory 75 may be implemented on a single integrated circuit and/or on the same integrated circuit as the common processing modules of processing module 50 and the digital receiver and transmitter processing modules 64 and 76.

Figure 3 is a system diagram illustrating the interconnection of various devices to a computer host via a Universal Serial Bus (USB) in accordance with an embodiment of the present invention. A Personal Computer (PC) host 24 couples to various serviced devices via a USB. The USB 2.0 standard supports a maximum bit rate of 480 Mbps using a non-synchronous serial bit stream transfer technique. As is illustrated in Figure 3, the USB services a number of USB devices. Each of the serviced devices couples via a USB cable. The PC host 24 couples to a digital camera 302 via a USB cable 304A. The digital camera 302 further couples to a wireless interface device (WLAN or cellular based) 306 via a USB cable 304B. The wireless interface device 306 further couples to a printer 308 via a USB cable 304C. Printer 308 further couples to an audio/visual player 310 via a USB cable 304D. Audio/visual player 310 comprises one of a digital video device (DVD), an MP3 player, or a compact disc (CD) player. Audio/visual player 310 further couples to a hard disk drive 312 via a USB cable 304E. The hard disk drive 312 further couples to a keyboard 314 via a USB cable 304F. Finally, keyboard 314 further couples to a mouse 316 via a USB cable 304G.

As may further be seen, PC host 24 is also coupled to a picture printer 318 via a USB cable 304H. According to one aspect of the embodiments of the present invention, each device of Figure 3, with the exception of mouse 316, is operable to receive communication signals via a first USB cable or line, determine whether to process the communication signals, or whether to transmit the communication signals onward to another device to operate as a relay device. The particular arrangement of PC host 24 with picture printer 318 is particularly interesting in that even a PC may operate as a mere relay device. For example, if camera 302 produces digital images to PC host 24, PC host 24 is operable to determine whether to process the digital images (e.g., store them) or whether to forward (relay) the digital images to picture printer 318 for printing on picture paper. Similarly, each of the devices of Figure 3 (except, in this example, the mouse) is operable to perform such analysis and processing/forwarding.

Processing, as the term is used herein, relates to the type of device within which the "processing" occurs. For example, WLAN 306 converts communication signals to outgoing RF signals for transmission to an access point. Printer 308 prints the data, audio/visual player 310 generates audio/visual effects, etc. Thus, associated hardware with such "processing" is unique hardware for performing the desired function. The term processing, therefore, is broadly intended.

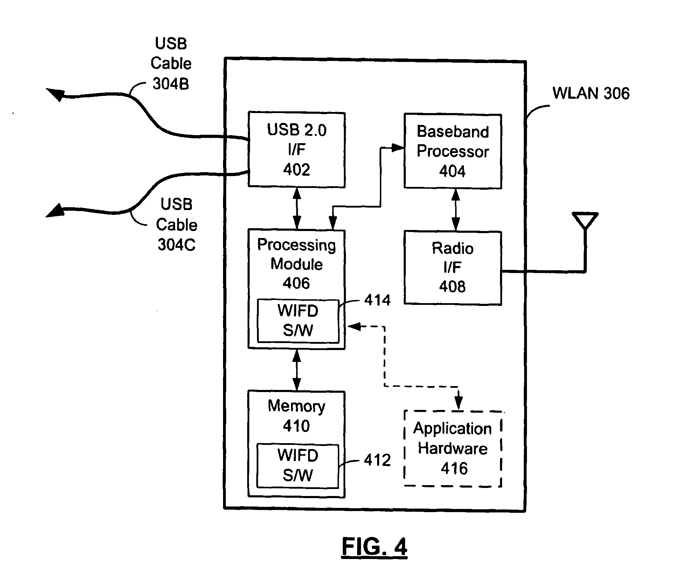

Figure 4 is a block diagram illustrating wireless interface device 306 constructed according to one embodiment of the present invention. The wireless interface device 306 services a PC host 24 and couples to other devices on a USB via USB cables 304B and 304C and is generally operable to receive data over a first port and to determine whether to transmit the data from one of a second or third port. Of the first, second and third ports, at least one port is a USB protocol port and at least one port is a wireless LAN port for wireless communications. The wireless interface device 306 includes a host interface 402 that couples the wireless interface device 306 to the PC host 24 according to the USB (or another) protocol. The wireless interface device 306 also includes a processing module 406 operably coupled to the host interface 402. Memory 410 operably couples to the processing module and includes SRAM, DRAM, Flash RAM, ROM, and/or other types of memory. A baseband processor 404 operably couples to the processing module 406. A Radio Frequency (RF) interface 408 operably couples to the baseband processor 404. The host interface 402 operates according to the USB 2.0 interface standard in the embodiment of Figure 4.

With the structure of Figure 4, the wireless interface device 306 operates as a system. The processing module 406 runs an Operating System (OS) that allows the processing module 406 to manage all of the components of the wireless interface device 306 and also manages the USB 2.0 interface 402, the baseband processor 404, and the radio interface 408. In one particular structure, the wireless interface device 306 supports both IEEE 802.11 (b) and IEEE 802.11 (g) operations in the 2.4 GHz band. In other structures the WLAN interface device 306 supports WLAN operations in the 5 GHz band, e.g., IEEE 802.11(a) and cellular operations as well, e.g., IS-95, 1xRTT, 1xEV-DO, 1xEV-DV, UMTS, GSM, EDGE, GPRS, etc.

While Figure 4 illustrates a wireless interface device, it should be understood that the circuit elements therein are exemplary and may vary according to implementation. For example, an interface device that does not include wireless transceiver circuitry but that otherwise performs the described functionality that does not relate to RF transmissions may be had. For example, the interface device may be operable as a print server with a printer port for coupling to a printer directly via a traditional parallel port connection to the printer. Likewise, rather than transceiver circuitry, the interface device may include application specific hardware according to device type. Thus, for example, the application specific hardware may be hardware for any of the devices shown in Figure 3. Stated differently, the circuitry of Figure 4 may readily be adapted to describe the circuitry and operation of any of the devices of Figure 3 for the applicable components.

Loaded into the memory 410 are wireless interface device software instructions (WIFD S/W) 412 that are loaded onto processing module 406 as WIFD S/W 414 for execution by the processing module 406. The WIFD S/W 414 includes the OS, e.g., Linux based OS, Microsoft Windows based OS, etc. With the OS running on the processing module 406, the processing module 406 manages the USB 2.0 I/F and the baseband processor 404 and radio interface 408 that support wireless communications. Further, the processing module 406 is capable of interfacing with the PC host 24 for management of the USB 2.0 link, for configuration and management of the WLAN, for management of the cellular service (if supported), for troubleshooting and diagnostic operations, and for a large number of other operations. Such instructions further relate to the type of device and associated hardware (e.g., application hardware 416).

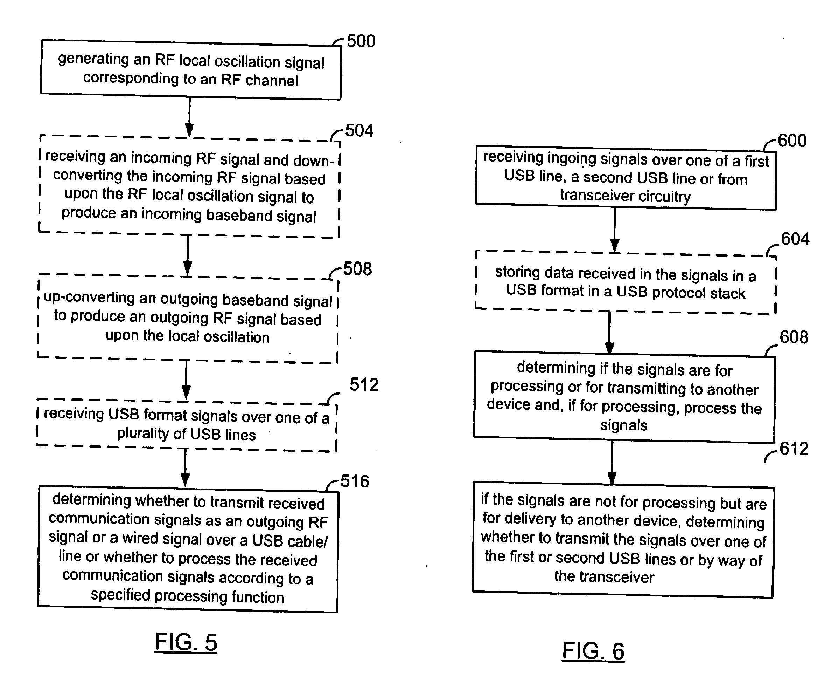

Figure 5 is a flowchart illustrating one method of the present invention. Generally, the method of Figure 5 relates to a wireless interface device formed according to the embodiments of the present invention. Referring now to Figure 5, the method includes generating an RF local oscillation signal corresponding to an RF channel (step 500). The oscillation signals may be used to up-convert outgoing RF signals as a part of up-converting outgoing baseband signals to RF or to down-convert ingoing RF signals to baseband (or low intermediate) frequency signals. For the described method, the interface device includes an RF transceiver port as well as two USB ports for receiving and transmitting USB protocol communication signals. The inventive method thus includes optionally receiving an incoming RF signal and down-converting the incoming RF signal based upon the RF local oscillation signal to produce an incoming baseband signal (step 504). The method further includes optionally up-converting an outgoing baseband signal to produce an outgoing RF signal based upon the local oscillation (step 508). In addition to receiving ingoing RF as described in relation to step 504 or generating outgoing RF for transmission as described in step 508 wherein both are based upon the local oscillation, the method according to the embodiment of the present invention optionally includes receiving USB format signals over one of a plurality of USB lines (step 512). Thus, for example, data signals may be received over a USB line in a USB protocol format for processing and transmission to an access point through the RF transceiver circuitry. Alternatively, RF signals may be received and converted to USB protocol data signals for transmission on one of the two USB lines

Whenever communication signals are received, whether by way of a USB cable/line or wireless RF medium, the embodiment of the inventive method includes determining whether to transmit received communication signals as an outgoing RF signal or a wired signal over a USB cable/line or whether to process the received communication signals according to a specified processing function (step 516). The specified processing function, of course, relates to the functions associated with the interface device. Here, received USB signals are either forwarded onto a second USB line or are wirelessly transmitted as RF. The wireless interface device includes logic for making such a determination based upon, for example, a specified destination ID or device type. In this specific example, the specific processing function of the wireless interface device is to convert the USB data to RF and to wirelessly transmit the RF.

Figure 6 is a flowchart illustrating one embodiment of the present invention performed in an interface device. Initially, the method according to the present embodiment includes receiving ingoing signals over one of a first USB line, a second USB line or from transceiver circuitry (step 600). Thereafter, the method includes storing data received in the signals in a USB format in a USB protocol stack (step 604). The received ingoing signals, after storing in the USB format, are then evaluated and the method includes determining if the signals are for processing or for transmitting to another device and, if for processing, process the signals (step 608). Finally, if the signals are not for processing but are for delivery to another USB device, the method includes determining whether to transmit the signals over one of the first or second USB lines or by way of the transceiver to an RF device such as an access point (step 612).

As has been described previously, the inventive circuitry and methods therefor may be implemented in a wide range of device types. In the example of Figure 6, the device type was a wireless interface device having an ability to receive and to either process or forward received data. More specifically, the device provided circuitry and a method for receiving USB data on a USB port and forwarding the data to an access point through transceiver circuitry or, alternatively, receiving data over the wireless transceiver port and forwarding the data over a USB port.

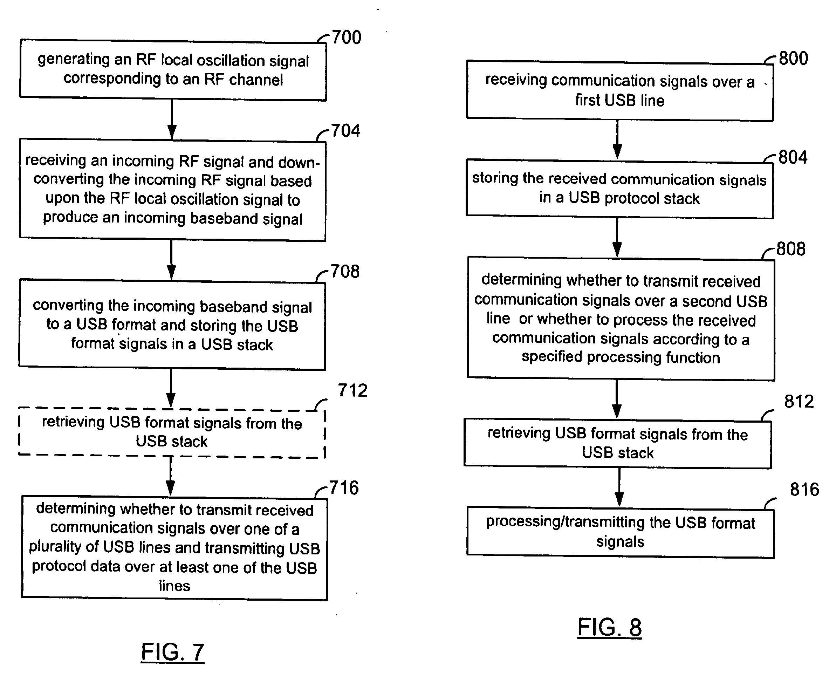

Figure 7 is a flowchart illustrating additional aspects of the embodiments of the wireless interface devices. More specifically, the method includes generating an RF local oscillation signal corresponding to an RF channel (step 700). Thereafter, the method includes receiving an incoming RF signal and down-converting the incoming RF signal based upon the RF local oscillation signal to produce an incoming baseband signal (step 704). Thereafter, the method includes converting the incoming baseband signal to a USB format and storing the USB format signals in a USB stack (step 708). Thereafter, the invention includes optionally retrieving the USB format signals from the USB stack (step 712) and determining whether to transmit the received communication signals over one of a plurality of USB lines and transmitting USB protocol data over at least one of the USB lines (step 716).

Figure 8 is a flowchart illustrating a method of an interface device according to one embodiment of the present invention. The method includes initially receiving communication signals over a first USB line in a USB protocol format (step 800). Thereafter, the invention includes storing the received communication signals in a USB protocol stack (step 804). Thereafter, the invention includes determining whether to transmit received communication signals over a second USB line or whether to process the received communication signals according to a specified processing function (step 808). After the determining step, the invention includes retrieving USB format signals from the USB stack (812) and processing/transmitting the USB format signals (step 816).

The method of Figure 8 describes the embodiment of the invention in general terms and may be employed in a plurality of different devices or systems. For example, if within an RF transceiver, the term "processing" relates to up-converting and transmitting over an RF channel. If employed within a hard disk drive, processing relates to storing the data. If employed within a display device, audio device or printing device, processing relates to displaying imagery, generating audio or printing an image. Thus, the inventive method includes receiving communication signals over one of a USB port or an RF port, determining whether to process the signals or to relay the signals to a down stream device either over a USB line or over an RF channel. For some of the embodiments, one aspect of the present invention includes storing received communication signals in a USB stack in a USB protocol format. Thus, even received RF, after being converted to baseband, is converted to a USB protocol and stored in a USB protocol stack. As such, any known USB processing functionality may readily retrieve the data from the USB protocol stack and perform its intended processing. The method of Figure 8 further includes receiving USB data and storing the USB data in a USB protocol stack prior to transmitting the data as an RF signal.

The preceding discussion has presented an interface device. As one of average skill in the art will appreciate, other embodiments may be derived from the teachings of the present invention without deviating from the scope of the claims.

## Claims

1. An intelligent wireless local area network USB port interface device, comprising:
a local oscillator that generates an RF local oscillation signal corresponding to an RF channel;
a receiver section operably coupled to the local oscillator to receive the RF local oscillation signal, wherein the receiver section receives an incoming RF signal, and wherein the re-ceiver section down-converts the incoming RF signal based upon the RF local oscillation signal to produce an incoming baseband signal;
a transmitter section operably coupled to the local oscillator to receive the RF local oscillation signal, wherein the transmitter section receives an outgoing baseband signal, and wherein the transmitter section up-converts the outgoing baseband signal to produce an outgoing RF signal;
a dual host USB interface module further including a plurality of USB ports for receiving and transmitting USB format signals over a corresponding plurality of USB lines;
memory for storing wireless interface device software instructions that define logic for communicating over the plurality of USB lines; and
a processing module coupled to the dual host USB interface module operable to communicate over the plurality of USB lines, the processing module further coupled to receive the wireless interface device software instructions that define logic for communicating over the plurality of USB lines from the memory.

2. The intelligent wireless local area network USB port interface device of claim 1 further comprising a baseband processor operably coupled to communicate with the processing module and to the transmitter and receiver sections wherein the processing module receives at least one of USB communications from the dual host USB interface module and wireless communications from the receiver section and determines whether to transmit the received communications over at least one of the transmitter section and the dual host USB interface module.

3. The intelligent wireless local area network USB port interface device of claim 1 or 2 further including digital camera circuitry, and/or printer circuitry.

## Patentansprüche

1. Intelligente drahtlose Local Area Network USB-Port-Schnittstellenvorrichtung, die aufweist:
einen lokalen Oszillator, der ein hochfrequentes lokales Oszillationssignal entsprechend einem Hochfrequenzkanal erzeugt;
einen Empfängerabschnitt, der wirkend mit dem lokalen Oszillator gekoppelt ist, um das hochfrequente lokale Oszillationssignal zu empfangen, wobei der Empfängerabschnitt ein ankommendes Hochfrequenzsignal empfängt, und wobei der Empfängerabschnitt das ankommende Hochfrequenzsignal basierend auf dem hochfrequenten lokalen Oszillationssignal herunterkonvertiert, um ein ankommendes Basisbandsignal zu erzeugen;
einen Senderabschnitt, der wirkend mit dem lokalen Oszillator gekoppelt ist, um das hochfrequente lokale Oszillationssignal zu empfangen, wobei der Senderabschnitt ein abgehendes Basisbandsignal empfängt, und wobei der Senderabschnitt das abgehende Basisbandsignal hinaufkonvertiert, um ein abgehendes Hochfrequenzsignal zu erzeugen;
ein duales Host-USB-Schnittstellenmodul, das des Weiteren eine Vielzahl von USB-Ports aufweist zum Empfangen und Senden von USB-Format-Signalen über eine entsprechende Vielzahl von USB-Leitungen;
einen Speicher zum Speichern drahtloser Schnittstellenvorrichtungs-Softwarebefehle, die Logik zum Kommunizieren über die Vielzahl von USB-Leitungen definieren; und
ein Verarbeitungsmodul, das mit dem dualen Host-USB-Schnittstellenmodul gekoppelt ist, das so betreibbar ist, dass es über die Vielzahl von USB-Leitungen kommuniziert, wobei das Verarbeitungsmodul des Weiteren so gekoppelt ist, dass es die drahtlosen Schnittstellenvorrichtungs-Softwarebefehle empfängt, die Logik zum Kommunizieren über die Vielzahl von USB-Leitungen von dem Speicher definieren.

2. Intelligente drahtlose Local Area Network USB-Port-Schnittstellenvorrichtung nach Anspruch 1, die des Weiteren einen Basisband-Prozessor aufweist, der wirkend gekoppelt ist, um mit dem Verarbeitungsmodul zu kommunizieren, und mit den Sender- und Empfängerabschnitten, wobei das Verarbeitungsmodul wenigstens eine der USB-Kommunikationen von dem dualen Host-USB-Schnittstellenmodul und der drahtlosen Kommunikationen von dem Empfängerabschnitt empfängt und bestimmt, ob die empfangenen Kommunikationen über wenigstens eines des Empfängerabschnitts und des dualen Host-USB-Schnittstellenmoduls zu senden sind.

3. Intelligente drahtlose Local Area Network USB-Port-Schnittstellenvorrichtung nach Anspruch 1 oder 2, die des Weiteren eine Digitalkameraschaltung und/oder eine Druckerschaltung aufweist.

## Revendications

1. Dispositif d'interface de port USB de réseau local sans fil intelligent, comprenant :
un oscillateur local qui génère un signal d'oscillation locale RF correspondant à un canal RF ;
une section réceptrice couplée de manière opérationnelle à l'oscillateur local pour recevoir le signal d'oscillation locale RF, dans lequel la section réceptrice reçoit un signal RF entrant, et dans lequel la section réceptrice effectue une conversion décroissante du signal RF entrant sur la base du signal d'oscillation locale RF pour produire un signal de bande de base entrant ;
une section émettrice couplée de manière opérationnelle à l'oscillateur local pour recevoir le signal d'oscillation locale RF, dans lequel la section émettrice reçoit un signal de bande de base sortant, et dans lequel la section émettrice effectue une conversion croissante du signal de bande de base sortant pour produire un signal RF sortant ;
un module d'interface USB hôte double comprenant en outre une pluralité de ports USB pour recevoir et émettre des signaux de format USB sur une pluralité correspondante de lignes USB ;
une mémoire pour mémoriser des instructions logicielles de dispositif d'interface sans fil qui définissent une logique pour communiquer sur la pluralité de lignes USB ; et
un module de traitement couplé au module d'interface USB hôte double utilisable pour communiquer sur la pluralité de lignes USB, le module de traitement étant en outre couplé pour recevoir les instructions logicielles de dispositif d'interface sans fil qui définissent une logique pour communiquer sur la pluralité de lignes USB à partir de la mémoire.

2. Dispositif d'interface de port USB de réseau local sans fil intelligent selon la revendication 1, comprenant en outre un processeur de bande de base couplé de manière opérationnelle pour communiquer avec le module de traitement et aux sections émettrice et réceptrice dans lequel le module de traitement reçoit au moins l'une de communications USB du module d'interface USB hôte double et de communications sans fil de la section réceptrice et détermine s'il faut transmettre les communications reçues sur au moins l'un de la section émettrice et du module d'interface USB hôte double.

3. Dispositif d'interface de port USB de réseau local sans fil intelligent selon la revendication 1 ou 2, comprenant en outre un circuit de caméra numérique et/ou un circuit d'imprimante.
